# FASCICULE DE BREVET EUROPEEN

(11) **EP 0 689 375 B1**
(45) Date de publication et mention de la délivrance du brevet: **23.04.1997**
(21) Numéro de dépôt: 94909959.2
(22) Date de dépôt: 14.03.1994
(51) Int. Cl.: A01B 23/02, A01B 35/24

(54) **DENT FLEXIBLE A ELEMENTS INTERCHANGEABLES POUR APPAREIL ARATOIRE**
FLEXIBLER ZINKEN MIT AUSTAUSCHBAREN ELEMENTEN FÜR BODENBEARBEITUNGSGERÄT
FLEXIBLE TOOTH WITH INTERCHANGEABLE ELEMENTS FOR A PLOUGHING APPARATUS

(30) Priorité: 15.03.1993 FR 9303232
(43) Date de publication de la demande: 03.01.1996
(73) Titulaire: Manufacture de Ressorts de Terrenoire, F-42100 Saint-Etienne (FR)
(72) Inventeur: DUBREUIL, Jean, F-63600 Ambert (FR); DUBREUIL, Gérard, F-42100 Saint-Etienne (FR); MASSON, Joseph, F-42400 Saint-Chamond (FR)
(74) Mandataire: Perrier, Jean-Pierre
(86) Numéro de dépôt international: FR9400272
(87) Numéro de publication internationale: WO9421105

(56) Documents cités:
- FR-A- 1 306 144
- FR-A- 2 111 352
- GB-A- 946 723
- GB-A- 1 025 413
- US-A- 1 746 092
- US-A- 1 992 313
- US-A- 5 007 484

## Description

Pour travailler le sol, il est connu d'avoir recours à des appareils aratoires comportant des dents flexibles ou des dents rigides montées sur articulation à ressort.

Dans les appareils dénommés cultivateurs et utilisés pour ameublir le sol, cette flexibilité est mise à profit pour fournir un meilleur ameublissement en utilisant les vibrations des dents, mais aussi pour obtenir le dégagement des dents, par effacement élastique, lorsqu'elles rencontrent des obstacles, tels que galets, pierres, branches...

Le brevet britannique GB - A - 1 025 413 décrit une dent de ce type comprenant :
- un élément flexible en forme de "e" dont l'extrémité supérieure est destinée à être fixée sur une traverse de l'appareil aratoire au moyen d'étriers,
- un bras coudé dont la partie supérieure est liée à l'extrémité de l'élément flexible par un corps en "U" dont l'âme comporte un logement de réception de cette partie supérieure,
- et un outil fixé sur l'extrémité libre du bras coudé.

En pratique, la flexibilité des dents leur permet d'abord de s'effacer vers l'arrière en décrivant, dans un plan vertical, une trajectoire dégageante élevant progressivement la partie active au-dessus de l'obstacle, puis, dès que l'obstacle est passé, de revenir par élasticité à leur position initiale de travail. Dans les terrains très caillouteux, les dents rencontrent plus fréquemment des obstacles qui, en raison de la seule possibilité de dégagement vers le haut, tendent à les soulever trop souvent, altérant ainsi la qualité du travail.

L'un des objets de l'invention est de fournir une dent flexible pour appareil aratoire, n'adoptant une trajectoire de dégagement vertical vers le haut que pour des obstacles incontournables et permettant un meilleur travail des sols caillouteux, ou encombrés de souches.

Un autre inconvénient de ce type de dent et que, sous l'effet des vibrations et flexions des lames, leurs moyens de fixation amovible avec l'appareil aratoire et avec les outils, parviennent dans le temps à prendre du jeu, ce qui conduit à des pertes d'éléments ou à des casses, donc à des pertes de temps inutiles.

Un autre objet de l'invention est de fournir des moyens de fixation de l'élément flexible sur l'appareil aratoire et des moyens de liaison de cet élément flexible avec l'outil qui permettent l'interchangeabilité de l'un ou l'autre des éléments et qui soient simples, peu onéreux tout en assurant une liaison fiable des éléments, quelles que soient les conditions d'exploitation de l'appareil.

A cet effet, dans la dent flexible selon l'invention, l'élément flexible est composé de plusieurs lames flexibles qui, disposées les unes à côté des autres, de manière que leurs petis chants soient en contact, comportent chacune une extrémité supérieure recourbée et sont liées les unes aux autres :
- du côté de la fixation sur l'appareil, par une platine inférieure à section en "L" agencée de manière à plaquer les extrémités recourbées des lames contre l'angle inférieur avant de la traverse sous l'action du serrage des étriers,
- et du côté du bras coudé de l'outil :
   - par un corps en "U", dont les ailes latérales calent transversalement l'extrémité libre des lames latérales,
   - par une plaquette de serrage s'insérant entre les deux ailes latérales du corps en "U",
   - par des tenons de calage saillant de l'un des deux éléments, corps en "U" - plaque de serrage, et s'engageant dans des perforations ménagées au moins dans les lames latérales,
- et par des boulons de fixation traversant la plaquette de serrage, la lame centrale, la partie supérieure du bras coudé de l'outil et l'âme du corps.

Ainsi, en complément de sa possibilité d'effacement vertical, la dent possède une souplesse transversale lui permettant de tenter de contourner des obstacles avant de s'élever, ce qui améliore la qualité du travail.

Grâce à leur fixation positive, les lames composant la partie flexible de la dent sont bien tenues en torsion et ne risquent pas, lors des mouvements de la dent, de s'enchevêtrer en perdant leur efficacité.

Par ailleurs, il est possible de remplacer très rapidement et très aisément la partie active de chaque dent en n'agissant que sur les boulons assurant la fixation de celle-ci sur l'extrémité des lames.

L'invention sera de toute façon mieux comprise à l'aide de la description qui suit en référence au dessin schématique annexé représentant, à titre d'exemple non limitatif, une forme d'exécution de cette dent, dans le cas où elle comporte trois lames.
Figure 1 en est une vue en perspective,
Figure 2 en est une vue en coupe montrant plus en détails les moyens de fixation des extrémités de la lame,
Figure 3 est une vue en coupe suivant III-III de figure 2,
Figure 4 est une vue similaire à la figure 3 montrant une variante de réalisation de cette dent.

Dans ce dessin, la référence numérique 2 désigne une traverse de l'appareil aratoire, 3 l'élément flexible, et 4 l'élément actif composé d'un bras 5 portant un outil, non représenté.

L'élément flexible est composé de plusieurs lames, et par exemple de trois lames, respectivement centrale 6a, et latérales 6b, réalisées en acier à ressort et courbées en forme de "e". Ces lames sont disposées les unes à côté des autres de manière que leurs petits chants soient en contact.

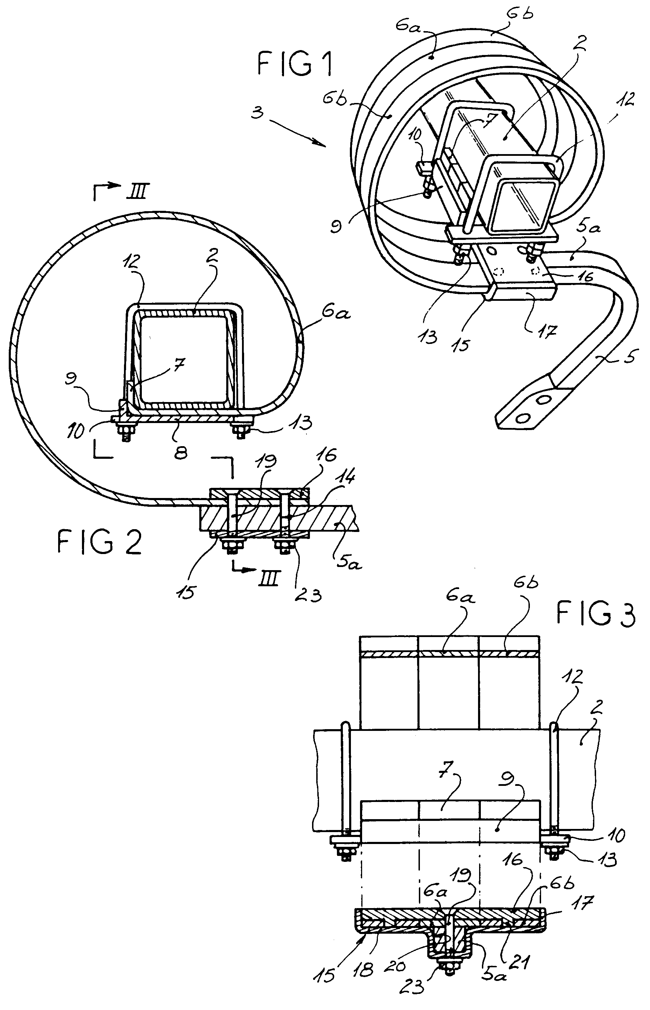

A son extrémité supérieure venant en contact avec la traverse 2 et, comme le montre plus en détails la figure 2, chaque lame 6a-6b est coudée en 7 pour pouvoir se caler en translation sur la partie inférieure de la face avant 2a de la traverse 2. Les extrémités des trois lames sont plaquées contre la face inférieure de la traverse 2 par une platine inférieure 8 comportant, localement, un retour coudé 9 plaquant le retour coudé 7 des lames contre la traverse 2. Ce retour coudé s'étend transversalement sur la partie centrale du bord avant de la platine et est bordé latéralement par deux pattes 10 servant à la fixation de l'une des deux branches de deux étriers filetés 12, coiffant la traverse 2. On conçoit aisément que le serrage des écrous 13, fixés sur les extrémités filetées des étriers 12, provoque le plaquage de l'âme des étriers sur la traverse et, par action sur la platine 8, le pincement de l'extrémité des lames 6a-6b entre cette platine et la traverse 2.

Ainsi fixées les extrémités des lames sont calées en translation longitudinale, par butée de leurs retours coudés 7 sur la traverse 2, et en translation transversale, par les deux étriers 12 qui les encadrent.

Ce dispositif simple et peu onéreux assure une excellente fixation, tout en permettant un démontage rapide lorsqu'il faut remplacer l'une quelconque des lames flexibles.

A son autre extrémité, chacune des lames 6a-6b est traversée par deux alésages 14 alignés et s'insère entre, d'une part, un corps 15, et d'autre part, une plaquette de serrage 16.

Comme le montre plus en détails la figure 3, le corps 15 présente en section transversale la forme générale d'un "U" dont les ailes latérales 17 sont séparées par un intervalle correspondant à la largeur des trois lames et dont la hauteur est égale à l'épaisseur de ces lames, majorée au moins de l'épaisseur de la plaquette 16. Dans sa partie centrale, l'âme 18 du corps 15 comporte une rainure emboutie longitudinale formant un logement 20 pour l'extrémité 5a du bras 5 de l'élément actif 4. Les deux lames latérales 6b sont positionnées longitudinalement par introduction, dans leurs alésages 14, de tenons 21 saillant de la plaquette 16. Quant à la lame centrale 6a, elle est positionnée longitudinalement par engagement, dans ses perforations 14, de boutons 19 traversant la plaquette 16, la partie 5a de l'outil 5 et le fond de la rainure emboutie 20 du chapeau 15 pour recevoir au moins un écrou de fixation 23.

Dans une variante de réalisation, non représentée, les tenons coopérant avec les perforations 14 des lames latérales font saillie du fond de l'âme 18.

Il ressort de ce qui précède que la fixation en translation longitudinale et en translation transversale des extrémités des lames avec le corps 15 mais aussi avec le bras 5, est assurée par deux boutons 19, c'est à dire par une fixation simple et peu onéreuse, fiable, sûre et permettant l'interchangeabilité de l'élément actif.

Grâce à leur bonne fixation, aussi bien transversalement que longitudinalement, respectivement sur l'outil et sur la traverse 2, les lames 6a et 6b travaillent dans de bonnes conditions, et peuvent donc se déformer en torsion transversale, indépendamment les unes des autres sans se gêner et sans risque d'emmêlement, en tolérant ainsi les dégagements latéraux de l'outil, limitant l'ampleur des dégagements verticaux.

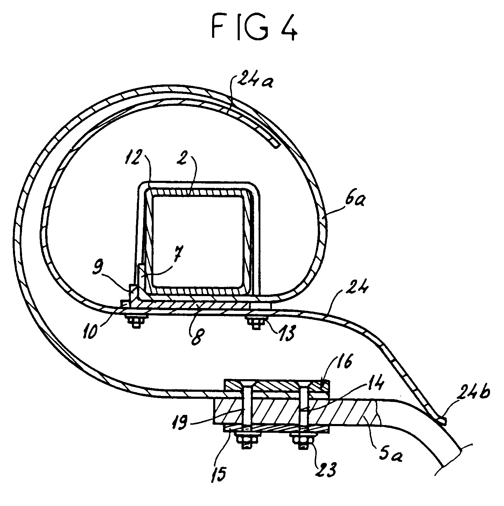

Comme montré à la figure 4, pour des conditions de travail difficiles, les lames de la dent flexible décrite ci-dessus sont renforcées par une lame butée élastique 24 réalisée dans le même matériau qu'elles. Cette lame 24 est fixée sous la platine 8 et présente une cambrure supérieure 24a, dont la concavité est ouverte vers l'arrière et se logeant dans la lame correspondante, et une cambrure inférieure 24b, dont la concavité est tournée vers l'avant et coiffe le coude du bras 5. Lorsque l'outil est soumis à un effort de réaction élevé le tirant vers l'arrière, la boucle du "e" des lames 6a, 6b se referment en suivant une première loi d'élasticité. Elles viennent ensuite en contact avec la cambrure supérieure 24a de la butée élastique, ce qui provoque le déplacement de leur point de pivotement et conduit à une seconde loi d'élasticité, à flexibilité variable par déplacement du point d'appui des lames 6a, 6b sur la lame 24.

La cambrure inférieure 24b en contact avec le bras 5 ajoute ses effets renforcateurs.

Cette dernière cambrure 24b peut être supprimée dans certaines applications.

Au repos, les extrémités de la lame 24 peuvent être à distance des parties en vis à vis des lames 6a-6b et du bras 5.

La lame élastique addittionnelle 24 peut également être utilisée comme renfort dans le cas où la dent flexible est réduite à une lame unique de forme similaire rassemblant en une même pièce l'élément flexible 6 et le bras 5 de l'outil.

## Revendications

1. Dent flexible pour appareil aratoire du type comprenant :
- un élément flexible (3) en forme de "e" dont l'extrémité supérieure est destinée à être fixée sur une traverse (2) de l'appareil aratoire au moyen d'étriers (12),
- un bras coudé (5) dont la partie supérieure (5a) est liée à l'extrémité de l'élément flexible par un corps en "U" (15) dont l'âme (18) comporte un logement de réception de cette partie supérieure (5a),
- et un outil fixé sur l'extrémité libre du bras coudé (5),
**caractérisée en ce que** l'élément flexible (3) est composé de plusieurs lames flexibles (6a-6b) qui, disposées les unes à côté des autres, de manière que leurs petits chants soient en contact, comportent chacune une extrémité supérieure recourbée (7) et sont liées les unes aux autres :
- du côté de la fixation sur l'appareil, par une platine inférieure (8) à section en "L" agencée de manière à plaquer les extrémités recourbées des lames contre l'angle inférieur avant de la traverse sous l'action du serrage des étriers (12),
- et du côté du bras coudé de l'outil :
- par le corps en "U" (15), dont les ailes latérales (17) calent transversalement l'extrémité libre des lames latérales (6b),
- par une plaquette de serrage (16) s'insérant entre les deux ailes latérales (17) du corps en "U" (15),
- par des tenons de calage (21) saillant de l'un des deux éléments, corps en "U" (15) - plaquette de serrage (16), et s'engageant dans des perforations ménagées au moins dans les lames latérales (6b),
- et par des boulons de fixation (19) traversant la plaquette de serrage (16), la lame centrale (6a), la partie supérieure (5a) du bras coudé (5) de l'outil et l'âme (18) du corps en "U" (15).

2. Dent flexible selon la revendication 1, **caractérise en ce que** les tenons (21) font saillies de la plaquette de serrage (16).

3. Dent flexible selon la revendication 1, **caractérisée en ce que** les tenons (21) font saillie de l'âme (18) du corps en "U" (15).

4. Dent flexible selon l'une quelconque des revendications 1 à 3, **caractérisée en ce qu'**elle comporte une lame de renfort (24) qui est fixée sous la platine (8) et comporte, une cambrure supérieure (24a), se logeant dans les lames (6a-6b) et dont la concavité est ouverte vers l'arrière.

5. Dent flexible selon la revendication 4, **caractérisée en ce que** la lame de renfort comporte également une cambrure inférieure (24b), dont la concavité est tournée vers l'avant et qui coiffe le coude du bras (5).

## Claims

1. A flexible tooth for ploughing apparatus of the type comprising:
- an 'e' shaped flexible element (3) of which the upper end is intended to be fixed to a cross member (2) of the ploughing apparatus by means of stirrups (12),
- a angled arm (5) of which the upper part (5a) is connected to the end of the flexible element by a U-shaped body (15) of which the base includes a housing for receiving this upper part (5a),
- and a tool fixed on the free end of the angled arm (5), characterised in that the flexible element is composed of several flexible blades (6a-6b) which are disposed side by side in such a manner that their small edges are in contact, and each includes a curved upper end (7), being connected together:
- at the side where they are fixed to the apparatus, by a lower plate (8) of L-shaped section arranged so as to flatten the curved ends of the blades against the lower front corner of the cross member under the gripping action of the stirrups (12),
- and at the angled arm side of the implement:
- by the U-shaped body (15), of which the lateral sides (17) immobilise the free ends of the lateral blades (6b) transversely,
- by a gripping plate (16) inserted between the two lateral sides (17) of the U-shaped body (15),
- by locking lugs (21) projecting from one of the two elements, the U-shaped body (15) - gripping plate (16), and engaging in perforations formed at least in the lateral blades (6b),
- and by fixing bolts (19) passing through the gripping plate (16), the central blade (6a), the upper portion (5a) of the angled arm (5) of the implement and the base (18) of the U-shaped body (15).

2. A flexible tooth according to Claim 1, characterised in that the lugs (21) project from the gripping plate (16).

3. A flexible tooth according to Claim 1, characterised in that the lugs (21) project from the base (18) of the U-shaped body (15).

4. A flexible tooth according to any one of Claims 1 to 3, characterised in that it includes a reinforcing blade (24) which is fixed under the plate (8) and includes an upper bend (24a) housed in the blades (6a-6b) and of which the concavity opens rearwardly.

5. A flexible tooth according to Claim 4, characterised in that the reinforcing blade also includes a lower curve (24b), of which the concavity faces forwards and covers the angle of the arm (5).

## Patentansprüche

1. Flexibler Zinken für ein landwirtschaftliches Gerät, umfassend:
- ein "e"-förmiges flexibles Element (3), dessen oberes Ende dazu bestimmt ist, mittels Bügeln (12) an einer Traverse (2) des landwirtschaftlichen Geräts befestigt zu werden,
- einen abgewinkelten Schenkel (5), dessen oberer Teil (5a) an das Ende des flexiblen Elements mittels eines "U"-förmigen Körpers (15) angefügt ist, dessen Basissteg (18) eine Aufnahme zur Anordnung dieses oberen Teils (5a) umfaßt,
- und ein an dem freien Ende des abgewinkelten Schenkels (5) befestigtes Werkzeug.
**dadurch gekennzeichnet,**
daß das flexible Element (3) von mehreren flexiblen Streifen (6a-6b) gebildet ist, welche derart nebeneinander angeordnet sind, daß ihre Schmalseiten in Kontakt sind, wobei die Streifen jeweils ein umgebogenes, oberes Ende (7) aufweisen und miteinander verbunden sind, und zwar:
- auf der Seite der Befestigung am Gerät mittels einer unteren Platte (8) mit "L"-förmigem Querschnitt, welche derart angeordnet ist, daß die umgebogenen Enden der Streifen unter der Wirkung der Einspannung der Bügel (12) gegen die untere, vordere Kante der Traverse gedrückt werden,
- und auf der Seite des abgewinkelten Schenkels des Werkzeugs:
- mittels des "U"-förmigen Körpers (15), dessen Seitenflügel (17) das freie Ende der seitlichen Streifen (6b) festlegen,
- mittels einer Klemmlasche (16), welche sich zwischen die beiden Seitenflügel (17) des "U"-förmigen Körpers (15) einfügt,
- mittels Fixierungsszapfen (21), welche von dem einen der beiden Elemente "U"-förmiger Körper (15) und Klemmlasche (16) vorstehen und in Lochungen eingreifen, welche zumindest in den seitlichen Streifen (6b) vorgesehen sind,
- und mittels Befestigungsbolzen (19), welche die Klemmlasche (16), den zentralen Streifen (6a), den oberen Teil (5a) des abgewinkelten Schenkels (5) des Werkzeugs und den Basissteg (18) des "U"-förmigen Körpers (15) durchsetzen.

2. Flexibler Zinken nach Anspruch 1,
**dadurch gekennzeichnet,**
daß die Zapfen (21) von der Klemmlasche (16) abstehen.

3. Flexibler Zinken nach Anspruch 1,
**dadurch gekennzeichnet,**
daß die Zapfen (21) von dem Basissteg (18) des "U"-förmigen Körpers (15) abstehen.

4. Flexibler Zinken nach einem der Ansprüche 1 bis 3,
**dadurch gekennzeichnet,**
daß er einen Verstärkungsstreifen (24) umfaßt, der unter der Platte (8) befestigt ist und eine obere Wölbung (24a) aufweist, welche in den Streifen (6a-6b) untergebracht ist und deren Konkavität nach hinten hin geöffnet ist.

5. Flexibler Zinken nach Anspruch 4,
**dadurch gekennzeichnet,**
daß der Verstärkungsstreifen auch eine untere Wölbung (24b) aufweist, deren Konkavität nach vorne gerichtet ist und die Biegung des Schenkels (5) überragt.
